(19) Europäisches Patentamt / European Patent Office / Office européen des brevets

(11) **EP 4 523 139 B1**

(12) **FASCICULE DE BREVET EUROPEEN**

(45) Date de publication et mention
de la délivrance du brevet:
**18.03.2026 Bulletin 2026/12**

(51) Classification Internationale des Brevets (IPC):
**G06N 3/0442** (2023.01)  **G06N 3/0455** (2023.01)
**G06N 3/048** (2023.01)  **B64D 45/00** (2006.01)
**G05B 23/02** (2006.01)  **B64D 15/04** (2006.01)
**B64D 33/02** (2006.01)

(21) Numéro de dépôt: **23727039.2**

(22) Date de dépôt: **05.05.2023**

(52) Classification Coopérative des Brevets (CPC):
**G05B 23/024; B64D 45/00; G06N 3/0442;
G06N 3/0455;** B64D 15/04; B64D 2033/0233;
B64D 2045/0085; G06N 3/048

(86) Numéro de dépôt international:
**PCT/FR2023/000080**

(87) Numéro de publication internationale:
**WO 2023/218138 (16.11.2023 Gazette 2023/46)**

(54) **PROCÉDÉ DE DÉTECTION D'UNE ANOMALIE DANS UN SYSTÈME D'UN AERONEF**

VERFAHREN ZUR ERKENNUNG EINER ANOMALIE IN EINEM SYSTEM EINES FLUGZEUGS

METHOD FOR DETECTING AN ANOMALY IN A SYSTEM OF AN AIRCRAFT

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **10.05.2022 FR 2204389**

(43) Date de publication de la demande:
**19.03.2025 Bulletin 2025/12**

(73) Titulaires:
• **SAFRAN**
**75015 Paris (FR)**
• **Safran Nacelles**
**76700 Gonfreville-l'Orcher (FR)**

(72) Inventeurs:
• **HAMHOUM, Mohamed**
**77550 Moissy Cramayel (FR)**
• **FABRE, Daniel**
**77550 Moissy Cramayel (FR)**
• **BOURLAND, Joffrey**
**77550 Moissy Cramayel (FR)**

(74) Mandataire: **Gevers & Orès
Immeuble le Palatin 2
3 Cours du Triangle
CS 80165
92939 Paris La Défense Cedex (FR)**

(56) Documents cités:
**US-A1- 2020 012 918**

Description

**Domaine technique de l'invention**

La présente invention concerne un procédé de détection d'une anomalie dans un système d'un aéronef, un programme d'ordinateur correspondant et un dispositif de surveillance.

**Arrière-plan technologique**

Il est connu, par example de US 2020/012918 A1, d'utiliser un procédé de détection d'une anomalie dans un dispositif d'un aéronef, comportant :

- une obtention d'une série de mesures dite courante d'une ou plusieurs grandeurs physiques du dispositif, pendant une période de temps où le dispositif fonctionne ;
- à partir de la série courante de mesures, une fourniture par un réseau de neurones de type encodeur/décodeur d'une série reconstruite dite courante ; et
- une comparaison de la série courante reconstruite avec la série courante de mesures afin d'obtenir une série d'anomalies dite courante.

Plus précisément, comme cela est connu en soit, un encodeur/décodeur 126 comporte une partie encodeur et une partie décodeur. La partie encodeur est conçue pour réaliser une compression de l'information qui lui est fournie en entrée afin de fournir une information intermédiaire incomplète du fait de la compression. La partie décodeur est conçue pour réaliser une décompression, c'est-à-dire pour reconstituer l'information fournie en entrée à partir de l'information intermédiaire incomplète.

Il est ainsi connu d'utiliser ce procédé pour une turbomachine d'un aéronef, en comparant chaque score d'anomalie de la série d'anomalie à un seuil de détection prédéfini. Si le score d'anomalie est supérieur au seuil de détection, une anomalie est détectée. Ce seuil de détection est défini en maximisant un score F (de l'anglais « F-score ») sur plusieurs séries de mesures labellisées, certaines étant normales et d'autre anormales.

Cependant, les inventeurs ont constaté que ce procédé connu ne donnait pas de bons résultats pour certains dispositifs d'un aéronef, comme par exemple pour des vannes d'un canal d'acheminement d'air chaud d'un système de dégivrage d'une lèvre d'entrée d'air.

Il peut ainsi être souhaité de prévoir un procédé de détection d'une anomalie qui permette de s'affranchir d'au moins une partie des problèmes et contraintes précités.

Résumé de l'invention

Il est proposé un procédé de détection d'une anomalie dans un système d'un aéronef selon la revendication 1.

En effet, l'encodeur/décodeur ne peut généralement pas reconstruire des variations importantes mais de courte durée de la série de mesure, à cause en particulier de la perte d'information consécutive à la compression d'information réalisée par la partie encodeur. Dans ce cas, la série courante reconstruite est très différente de la série de mesure courante pendant cette courte durée de variations importantes, ce qui entraîne des anomalies élevées dans la série d'anomalie, dépassant le seuil de détection alors que le système fonctionne normalement. Or, les mesures de nombreux systèmes d'un aéronef peuvent présenter des variations importantes et de courte durée, sans que cela ne représente une anomalie, ni un signal faible d'anomalie. Par exemple, dans les vannes d'un système de dégivrage, au début de la montée en pression, il est habituel que les mesures de pression dépassent instantanément les valeurs nominales attendues. Or, l'aire séparant la fonction de répartition courante de la fonction de répartition de référence sera peu sensiblement à des variations de courte durée, même importante, du fait justement qu'elles sont de courte de durée. Ainsi, l'invention permet d'éviter les fausses détection d'anomalie qui risquerait de se produire en utilisant un seuil de détection.

L'invention peut en outre comporter l'une ou plusieurs des caractéristiques avantageuses suivantes, selon toute combinaison techniquement possible.

De façon avantageuse, le système est conçu pour fonctionner dans plusieurs configurations de fonctionnement et le procédé comporte en outre :

- une sélection, parmi des encodeur/décodeur respectivement associé aux configurations de fonctionnement, de celui associé à la configuration de fonctionnement dans lequel se trouvait le dispositif pendant la série courante de mesures.

De façon avantageuse également, l'encodeur/décodeur est un système à apprentissage préalablement entraîné pour reconstruire des séries de mesures acquises pendant un fonctionnement normal du système.

De façon avantageuse également, l'encodeur/décodeur comporte un réseau de neurones encodeur et un réseau de neurones décodeur.

De façon avantageuse également, les réseaux de neurones sont deux réseaux de neurones récurrents à mémoire court terme et long terme.

De façon avantageuse également, le système est un système de dégivrage d'une lèvre d'entrée d'air, le système de dégivrage étant conçu pour prélever de l'air chaud d'une turbomachine, et comportant un canal d'acheminement de l'air chaud jusqu'à la lèvre d'entrée d'air et au moins une vanne sur le canal d'acheminement.

De façon avantageuse également, le système de dégivrage comporte deux vannes en série sur le canal d'acheminement.

Il est également proposé un programme d'ordinateur téléchargeable depuis un réseau de communication et/ou enregistré sur un support lisible par ordinateur, caractérisé en ce qu'il comprend des instructions pour l'exécution des étapes d'un procédé selon l'invention, lorsque ledit programme d'ordinateur est exécuté sur un ordinateur.

Il est également proposé un dispositif de surveillance d'un système d'un aéronef selon la revendication 9.

Brève description des figures

L'invention sera mieux comprise à l'aide de la description qui va suivre, donnée uniquement à titre d'exemple et faite en se référant aux dessins annexés dans lesquels :

- la figure 1 est une vue fonctionnelle schématique d'un exemple d'un aéronef dans lequel l'invention est mise en œuvre,
- la figure 2 est une vue fonctionnelle d'un exemple d'encodeur/décodeur utilisé dans l'aéronef de la figure 1,
- la figure 3 est une vue fonctionnelle d'un exemple d'un dispositif de surveillance d'un dispositif de dégivrage d'une lèvre d'entrée d'air de l'aéronef,
- la figure 4 est un schéma-bloc d'un exemple d'un procédé de surveillance du dispositif de dégivrage,
- la figure 5 est un schéma-bloc d'un procédé d'un procédé de configuration du dispositif de surveillance,
- la figure 6 est un graphique illustrant une fonction de répartition de référence et plusieurs fonction de répartition calculées par le dispositif de surveillance,
- la figure 7 est un graphique illustrant un exemple de série courante de mesures, ainsi que la série courante reconstruite et la série courante d'anomalies associées, dans le cas d'un comportement normal,
- la figure 8 est un graphique illustrant un exemple de série courante de mesures, ainsi que la série courante reconstruite et la série courante d'anomalies associées, dans le cas d'un comportement anormal, et

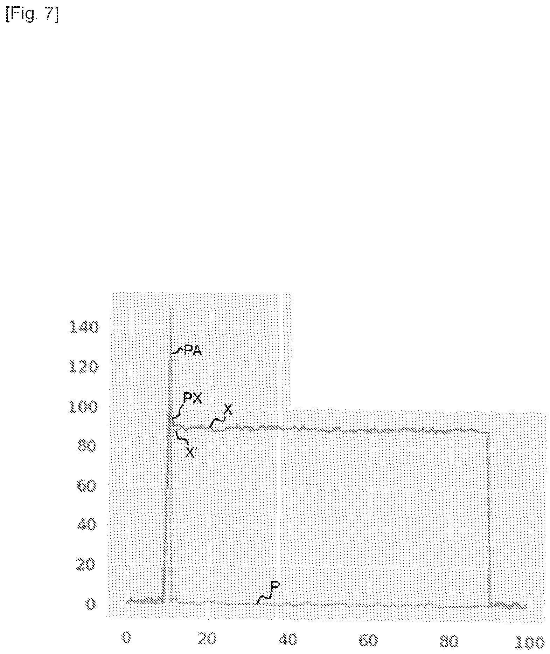

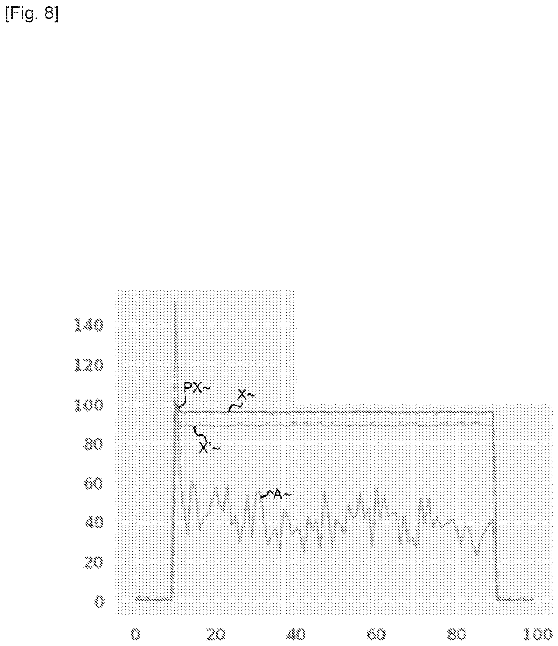

- la figure 8 est un graphique illustrant une fonction de répartition de référence et deux fonctions de répartition pour respectivement les cas des figures 7 et 8.

Description détaillée de l'invention

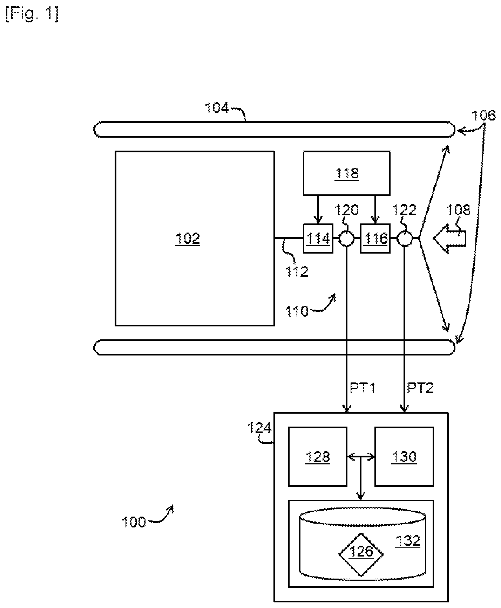

En référence à la figure 1, un exemple d'un aéronef 100 dans lequel l'invention est mise en œuvre, va à présent être décrit.

L'aéronef 100 comporte tout d'abord une turbomachine 102.

L'aéronef 100 comporte en outre une nacelle 104 entourant la turbomachine 102. La nacelle 104 présente en particulier une lèvre d'entrée d'air 106 délimitant une entrée d'air 108 pour la turbomachine 102.

L'aéronef 100 comporte en outre un système 110 de dégivrage de la lèvre d'entrée d'air 106. Le système de dégivrage 110 est en particulier conçu pour prélever de l'air chaud de la turbomachine 102, et comporte un canal 112 d'acheminement de l'air chaud jusqu'à la lèvre d'entrée d'air 106. Le système de dégivrage 110 comporte par exemple, sur le canal d'acheminement 112, une première vanne 114 et une deuxième vanne 116 en série l'une de l'autre. Cette redondance permet d'assurer le bon fonctionnement du système de dégivrage 110 en cas de panne de l'une des deux vannes 114, 116. Chaque vanne 114, 116 est conçue pour être sélectivement dans un état ouvert, dans lequel la vanne 114, 116 est conçue pour réguler la pression aval de l'air chaud (en sortie de la vanne considérée) à une pression de régulation prédéfinie, et dans un état fermé, dans lequel la vanne 114, 116 est conçue pour empêcher la circulation de l'air chaud.

L'aéronef 100 comporte en outre un dispositif 118 de commande des vannes 114, 116.

Le système de dégivrage 110 est ainsi conçu pour fonctionner dans plusieurs configurations de fonctionnement, suivant les états dans lesquelles le dispositif de commande 118 place les vannes 114, 116. Dans la première configuration de fonctionnement, dite « ON », les deux vannes 114, 116 sont ouvertes. Dans la deuxième configuration de fonctionnement, dite « OFF », la vanne 114 est fermée, tandis que la deuxième vanne 116 est ouverte. Dans une troisième configuration de fonctionnement, dite « AUTOTEST », les vannes 114, 116 sont testées au début d'un vol de l'aéronef 100, lorsque la pression de l'air chaud en amont des vannes 114, 116 est basse.

L'aéronef 100 comporte en outre un premier capteur 120 de la pression aval PT1 de la première vanne 114 et un deuxième capteur 122 de la pression aval PT2 de la deuxième vanne 116.

L'aéronef 100 comporte en outre un dispositif 124 de surveillance des vannes 114, 116, à partir des pressions aval PT1, PT2.

Le dispositif de surveillance 124 comporte en particulier au moins un réseau de neurones de type encodeur/-décodeur 126. De préférence, un encodeur/décodeur 126 est prévu pour chaque configuration des vannes 114, 116.

Chaque encodeur/décodeur 126 comporte une partie encodeur et une partie décodeur. La partie encodeur est conçue pour réaliser une compression de l'information qui lui est fournie en entrée afin de fournir une information intermédiaire incomplète du fait de la compression. La partie décodeur est conçue pour réaliser une décompression, c'est-à-dire pour reconstituer l'information fournie en entrée à partir de l'information intermédiaire incomplète. Dans l'exemple décrit, l'information d'entrée consiste en une série temporelle de mesures des pressions aval PT1, PT2. La partie décodeur est ainsi conçu pour fourni une série temporelle reconstruite. L'encodeur/décodeur 126 est conçu pour fonctionner avec des séries de mesures acquises pendant un fonctionnement supposé normal des vannes 114, 116, c'est-à-dire en l'absence d'anomalie. Cela signifie qu'il est conçu pour que la série reconstruite ressemble le plus possible à la série de mesures lorsque cette dernière est acquise pendant un fonctionnement supposé normal des vannes 114, 116.

L'encodeur/décodeur 126 est par exemple un système à apprentissage. Dans ce cas, l'encodeur/décodeur 126 est préalablement entrainé à partir de plusieurs séries de mesures dites d'entraînement, toutes acquises pendant un fonctionnement supposé normal des vannes 114, 116.

Pour obtenir ces séries d'entraînement, il est par exemple possible de prendre des séries de mesures obtenues pendant le fonctionnement des vannes 114, 116 pour lesquelles des instants de panne ou bien d'au moins une des vannes 114, 116 ou bien de maintenance des vannes 114, 116 sont connus. Ainsi, il est possible de considérer que les vannes 114, 116 fonctionnaient normalement suffisamment avant ces instants. Ainsi, les mesures antérieures à ces instants d'une durée prédéfinie, par exemple un mois, peuvent être considérée comme acquises pendant un fonctionnement normal des vannes 114, 116, et utilisées pour obtenir les séries d'entraînement.

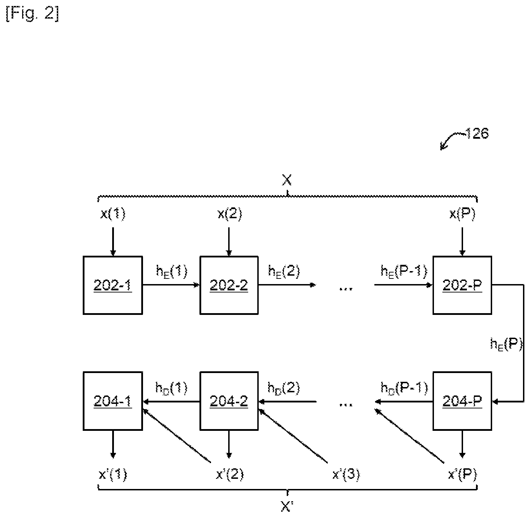

Un exemple d'encodeur/décodeur 126 sera décrit plus en détail en référence à la figure 2.

Le dispositif de surveillance 124 comporte par exemple un système informatique comportant une unité 128 de traitement de données (telle qu'un microprocesseur) et une mémoire principale 130 (telle qu'une mémoire RAM, de l'anglais « Random Access Memory ») accessible par l'unité de traitement 128. Le système informatique comporte en outre par exemple une interface réseau et/ou un support lisible par ordinateur, comme par exemple un support local (tel qu'un disque dur local 132) ou bien un support distant (tel qu'un disque dur distant et accessible via par l'interface réseau au travers d'un réseau de communication) ou bien encore un support amovible (tel qu'une clé USB, de l'anglais « Universal Serial Bus », ou bien un CD, de l'anglais « Compact Disc » ou bien un DVD, de l'anglais « Digital Versatile Disc ») lisible au moyen d'un lecteur approprié du système informatique (tel qu'un port USB ou bien un lecteur de disque CD et/ou DVD). Un programme d'ordinateur 134 contenant des instructions pour l'unité de traitement 128 est enregistré sur le support 132 et/ou téléchargeable via l'interface réseau. Ce programme d'ordinateur 134 est par exemple destiné à être chargé dans la mémoire principale 130, afin que l'unité de traitement 128 exécute ses instructions. Pour faciliter la description du programme d'ordinateur 132, les instructions seront décrites par la suite comme organisées en modules logiciels. Cependant, cette présentation ne préjuge pas de la forme du programme d'ordinateur 132, qui peut être quelconque. En particulier, l'encodeur/décodeur 126 peut être implémenté sous la forme d'un module logiciel du programme d'ordinateur 132.

Alternativement, tout ou partie de ces modules pourrait être implémenté sous forme de modules matériels, c'est-à-dire sous forme d'un circuit électronique, par exemple micro-câblé, ne faisant pas intervenir de programme d'ordinateur.

En référence à la figure 2, un exemple de réalisation de l'encodeur/décodeur 126 va à présent être décrit.

L'encodeur/décodeur 126 est conçu pour recevoir une série de mesures X regroupant P mesures x(1) ... x(p) ... x(P) prises à des instants de mesure respectifs repérés par l'indice p allant de 1 à P. Les mesures x(p) peuvent être unidimensionnelles (une seule grandeur physique mesurée à chaque instant de mesure) ou bien multidimensionnelles (plusieurs grandeurs physiques mesurées à chaque instant de mesure). Dans l'exemple décrit, chaque mesure x(p) regroupe une mesure de la pression aval PT1 et une mesure de la pression aval PT2 à l'instant de mesure considéré. Ainsi, la série de mesures X peut s'écrire :

[Math. 1]

$$X = \begin{bmatrix} x(1) & ... & x(P) \end{bmatrix} = \begin{bmatrix} PT1(1) & ... & PT1(P) \\ PT2(1) & ... & PT2(P) \end{bmatrix}$$

L'encodeur/décodeur 126 est conçu pour fournir une série reconstruite X' à partir de la série de mesures X. Ainsi, dans l'exemple décrit, la série reconstruite X' peut s'écrire :

[Math. 2]

$$X' = \begin{bmatrix} x'(1) & \dots & x'(P) \end{bmatrix} = \begin{bmatrix} PT1'(1) & \dots & PT1'(P) \\ PT2'(1) & \dots & PT2'(P) \end{bmatrix}$$

L'encodeur/décodeur 126 comporte par exemple un réseau de neurones encodeur 202 et un réseau de neurones décodeur 204 implémentant respectivement la partie encodeur et la partie décodeur.

Les réseaux de neurones 202, 204 sont par exemple deux réseaux de neurones récurrents à mémoire court terme et long terme (de l'anglais « Long short-term memory », également désigné par l'acronyme LSTM).

Dans ce cas, le réseau de neurones encodeur 202 peut comporter P unités 202-1 ... 202-p ... 202-P successives, chacune d'elle étant conçue pour calculer une valeur interne $h_E(1)$ ... $h_E(p)$ ... $h_E(P)$ à partir de l'une respective des mesures x(1) ... x(p) ... x(P), de la valeur interne de l'unité précédente et de paramètres de l'unité considérée. Chaque unité 202-p présente par exemple l'architecture décrite dans https://fr.wikipedia.org/wiki/Réseau_de_neurones_récurrents, de sorte que chaque valeur interne $h_E(p)$ est par exemple obtenue à partir des équations suivantes :

[Math. 3]

$$h_E(t) = o_E(t) \circ \sigma_h\big(c_E(t)\big)$$

$$o_E(t) = \sigma_g\big(W_E^o x(t) + U_E^o h_E(t-1) + b_E^o\big)$$

$$c_E(t) = f_E(t) \circ c_E(t-1) + i_E(t) \circ \check{c}_E(t)$$

$$f_E(t) = \sigma_g\big(W_E^f x(t) + U_E^f h_E(t-1) + b_E^f\big)$$

$$i_E(t) = \sigma_g\big(W_E^i x(t) + U_E^i h_E(t-1) + b_E^i\big)$$

$$\check{c}_E(t) = \sigma_h\big(W_E^c x(t) + U_E^c h_E(t-1) + b_E^c\big)$$

où $\circ$ désigne le produit matriciel d'Hadamard, $\sigma_g$ désigne la fonction signioïde, $\sigma_h$ désigne la fonction tangente hyperbolique, $f_E(t)$ désigne l'état d'activation de la porte d'oubli (« forget gate » en anglais) de l'encodeur, $i_E(t)$ désigne l'état d'activation de la porte d'entrée (« input gate » en anglais) de l'encodeur, $o_E(t)$ désigne l'état d'activation de la porte de sortie (« output gate » en anglais) de l'encodeur, $\check{c}_E(t)$ désigne l'état d'activation de la cellule d'entrée de l'encodeur, et $c_E(t)$ désigne l'état interne de la cellule de l'encodeur.

Le réseau de neurones décodeur 204 comporte de manière similaire P unités 204-1 ... 204-p ... 204-P successives. Chacune d'elle est conçue pour calculer une valeur interne $h_D(1)$ ... $h_D(p)$ ... $h_D(P)$ et une valeur reconstruite x'(1) ... x'(p) ... x'(P) à partir de paramètres et, sauf pour la dernière unité 204-P, de la valeur interne $h_D'(p+1)$ et de la valeur reconstruite x'(p+1) de l'unité suivante. Chaque unité 204-p présente par exemple l'architecture décrite dans https://fr.wikipedia.org/wiki/Réseau_de_neurones_récurrents, de sorte que chaque valeur interne $h_E(p)$ est par exemple obtenue à partir des équations suivantes :

[Math. 3]

$$x'(t) = o_D(t) \circ \sigma_h\big(c_D(t)\big)$$

$$o_D(t) = \sigma_g\left(W_D^o h_E(P) + U_D^o x'(t-1) + b_D^o\right)$$

$$c_D(t) = f_D(t) \circ c_D(t-1) + i_D(t) \circ \check{c}_D(t)$$

$$f_D(t) = \sigma_g\left(W_D^f h_E(P) + U_D^f x'(t-1) + b_D^f\right)$$

$$i_D(t) = \sigma_g\left(W_D^i h_E(P) + U_D^i x'(t-1) + b_D^i\right)$$

$$\check{c}_D(t) = \sigma_h\left(W_D^c h_E(P) + U_D^c x'(t-1) + b_D^c\right)$$

où $\circ$ désigne le produit matriciel d'Hadamard, $\sigma_g$ désigne la fonction sigmoïde, $\sigma_h$ désigne la fonction tangente hyperbolique, $f_D(t)$ désigne l'état d'activation de la porte d'oubli (« forget gate » en anglais) du décodeur, $i_D(t)$ désigne l'état d'activation de la porte d'entrée (« input gate » en anglais) du décodeur, $o_D(t)$ désigne l'état d'activation de la porte de sortie (« output gate » en anglais) du décodeur, $\check{c}_D(t)$ désigne l'état d'activation de la cellule d'entrée du décodeur, $c_D(t)$ désigne l'état interne de la cellule du décodeur, et W,U et b désignent les matrices de poids et les paramètres de biais du décodeur.

La valeur interne $h_D(P)$ pour la dernière unité 204-P du réseau de neurones décodeur 204 est prise égale à la valeur interne $h_E(P)$ de la dernière unité 202-P du réseau de neurones encodeur 202. Cette valeur interne $h_E(P) = h_D(P)$ forme donc l'information intermédiaire compressée de l'encodeur/décodeur 126.

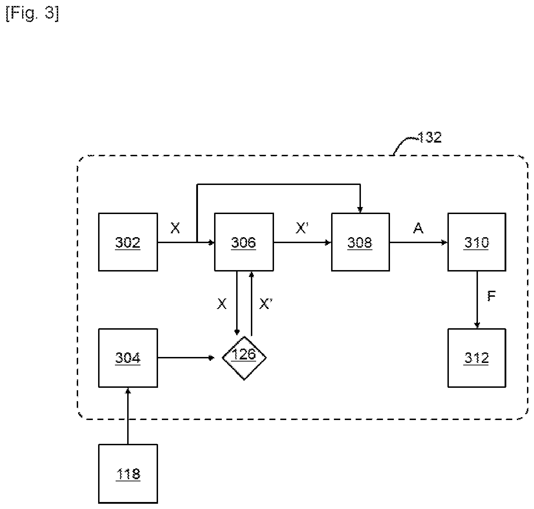

En référence à la figure 3, un exemple de réalisation du programme d'ordinateur 132, va à présent être décrit.

Le programme d'ordinateur 132 comporte un module 302 conçu pour obtenir une série de mesures dite courante X d'une ou plusieurs grandeurs physiques du système de dégivrage 110, pendant une période de temps où le système de dégivrage 110 fonctionne dans l'une de ses configurations de fonctionnement. Ainsi, une valeur de la ou de chacune des grandeurs physiques est obtenue pour chacun de plusieurs instants de mesure p successifs. Plus précisément, dans l'exemple illustré, les grandeurs physiques sont les pressions aval PT1, PT2 fournies par les capteurs 120, 122.

Le programme d'ordinateur 132 comporte en outre un module 304 conçu pour sélectionner l'encodeur/décodeur 126 associé à la configuration de fonctionnement dite courante, dans laquelle se trouvait le système de dégivrage 110 pendant les instants de mesure p. Par exemple, le module 304 est conçu pour recevoir une indication de la configuration de fonctionnement de la part du dispositif de commande 118.

Le programme d'ordinateur 132 comporte en outre un module 306 conçu pour utiliser l'encodeur/décodeur 126 sélectionné par le module 304, pour obtenir une série reconstruite dite courante X' à partir de la série courante de mesures X.

Le programme d'ordinateur 132 comporte en outre un module 308 conçu pour comparer la série courante reconstruite X' avec la série courante de mesures X, afin d'obtenir une série d'anomalies dite courante A représentant des anomalies de la série courante reconstruite X' par rapport à la série courante de mesures X.

Par exemple, le module 308 est conçu pour tout d'abord calculer, à chaque instant de mesure p, une erreur e(p) entre la mesure x(p) à cet instant de mesure p de la série courante de mesure X et la valeur reconstruite x'(p) à cet instant de mesure p de la série courante reconstruite X', par exemple par :

[Math. 3]

$$e(p) = |x(p) - x'(p)|$$

où |...| est la fonction valeur absolue.

Le module 308 est en outre par exemple conçu pour calculer, à chaque instant de mesure p, une anomalie a(p) (également appelée « score d'anomalie ») à partir de l'erreur e(p) à cet instant de mesure p. Les anomalies a(p) ainsi calculées forment la série d'anomalies A.

Par exemple, les erreurs e(p) sont supposées suivre une loi de probabilité prédéfinie, caractérisée par un ou bien plusieurs paramètres. Ces paramètres comportent par exemple une moyenne $\mu$ et/ou un écart type $\Sigma$. La loi de probabilité est par exemple une loi normale. Ainsi, les anomalies a(p) peuvent définir une distance par rapport à ce qui est attendu par la loi de probabilité, en utilisant le ou bien les paramètres de cette loi de probabilité.

Par exemple, en particulier dans le cas de la loi normale, l'anomalie a(p) peut être calculée à partir de la moyenne $\mu$ et de l'écart type $\Sigma$ de la loi de probabilité, par :

[Math. 4]

$$a(p) = (e(p) - \mu)^T \Sigma^{-1} (e(p) - \mu)$$

Le programme d'ordinateur 132 comporte en outre un module 310 conçu pour calculer une fonction de distribution cumulative F des anomalies a(p). La fonction de distribution cumulative est également appelée fonction de répartition.

Pour cela, le module 310 est de préférence conçu pour calculer un nombre prédéfini N (par exemple mille, de manière à avoir une approximation suffisamment précise) de valeurs d'anomalie $a_1 \ldots a_n \ldots a_N$ équidistantes entre zéro et l'anomalie a(p) maximale. Le module 310 est alors conçu pour calculer le nombre de valeurs d'anomalies $a_n$ inférieure ou égales à a, pour plusieurs valeurs de a, par exemple par la formule suivante :

[Math. 5]

$$F(a) = \sum_{n=1}^{N} 1_{[-\infty,\ a]}(a_n)$$

où $1_{[-\infty,\ a]}(a_n)$ vaut un lorsque $a_n$ est dans l'intervalle $[-\infty, a]$ et zéro autrement.

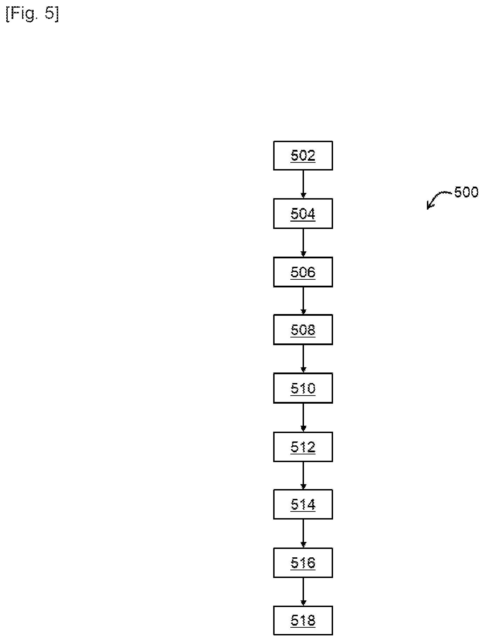

Le programme d'ordinateur 132 comporte en outre un module 312 conçu pour calculer une aire séparant la fonction de distribution cumulative F d'une fonction de distribution cumulative de référence $F_s$, attendue en l'absence d'anomalie. Un exemple d'obtention de la fonction de distribution cumulative de référence $F_s$ sera décrit plus loin en référence à la figure 5. De préférence, une fonction de distribution de référence $F_s$ est prévue pour chaque configuration de fonctionnement, et la comparaison est faite avec celle associée à la configuration de fonctionnement courante.

De préférence, le module 312 est en outre conçu pour normaliser l'aire A calculée. Par exemple, cette normalisation comporte la division de l'aire A par l'aire sous la fonction de distribution de référence $F_s$ (c'est-à-dire l'aire entre l'axe des abscisses et la fonction de distribution de référence $F_s$).

Le programme d'ordinateur 132 comporte en outre un module 314 conçu pour détecter une anomalie en fonction de la comparaison.

Plus précisément, l'aire calculée est comparée à un seuil prédéfini et, si l'aire est supérieure à ce seuil, une anomalie est détectée. Si l'aire est inférieure à ce seuil, aucune anomalie n'est détectée.

Il est également possible de prévoir plusieurs seuils pour distinguer une anomalie de niveau faible (aire supérieure au seuil le plus bas), d'une anomalie de niveau élevé (aire supérieure au seuil le plus haut).

Une anomalie détectée est par exemple examinée par un ingénieur qui peut alors envoyer un rapport à la compagnie aérienne utilisant l'aéronef pour la prévenir. La compagnie aérienne peut alors réaliser une opération de maintenance sur les vannes 114, 116, pour réaliser une réparation ou bien un remplacement.

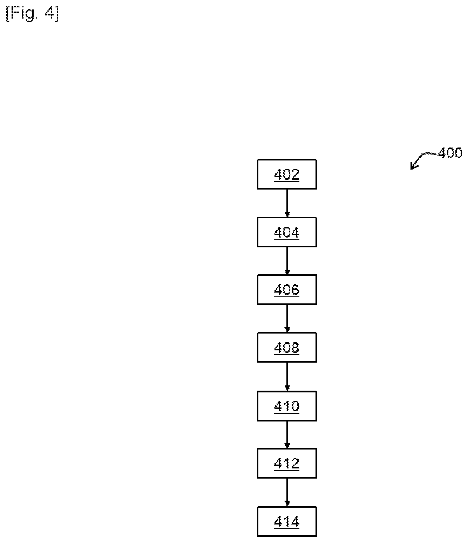

En référence à la figure 4, un exemple d'un procédé 400 de surveillance du système de dégivrage 110 va à présent être décrit.

Au cours d'une étape 402, le module 302 obtient une série courante de mesures X réalisées pendant que système de dégivrage 110 fonctionne dans l'une de ses configurations de fonctionnement, appelée configuration de fonctionnement courante.

Au cours d'une étape 404, le module 304 sélectionne l'encodeur/décodeur 126 associé à la configuration de fonctionnement courante.

Au cours d'une étape 406, le module 306 utilise l'encodeur/décodeur 126 sélectionné pour obtenir une série reconstruite courante X' à partir de la série courante de mesures X.

Au cours d'une étape 408, le module 308 compare la série courante reconstruite X' avec la série courante de mesures X, afin d'obtenir une série d'anomalies courante A.

Au cours d'une étape 410, le module 310 calcule la fonction de distribution cumulative F de la série d'anomalie courante A.

Au cours d'une étape 412, le module 312 calcule l'aire A séparant la fonction de distribution cumulative F à la fonction de distribution cumulative de référence $F_s$.

Au cours d'une étape 414, le module 314 détecte une anomalie en comparant l'aire calculée au seuil prédéfini.

En référence à la figure 5, un exemple d'un procédé 500 de configuration du dispositif de surveillance 124 va à présent être décrit.

Les étapes suivantes sont par exemple réalisées pour chaque configuration de fonctionnement du système de dégivrage 110.

Au cours d'une étape 502, plusieurs séries de mesures dites d'entraînement X* sont obtenues, pendant que le système de dégivrage 110 fonctionne normalement. Les séries d'entraînement X* comportent chacune par exemple P mesures.

Au cours d'une étape 504, un encodeur/décodeur 126 est entraîné à partir des séries d'entraînement X*, afin de fournir des séries reconstruites X'* qui sont respectivement le plus proche possible des séries d'entraînement X*.

Au cours d'une étape 506, plusieurs séries de mesures dites d'initialisation X° sont obtenues, pendant que le système de dégivrage 110 fonctionne normalement. De préférence, les séries d'initialisation X° sont différentes des séries d'entraînement X*. Les séries d'initialisation X° comportent chacune par exemple P mesures.

Au cours d'une étape 508, l'encodeur/décodeur 126 entraîné est utilisé pour fournir des séries reconstruites X°' à partir des séries d'initialisation X°.

Au cours d'une étape 510, pour chaque série d'initialisation X°, il est calculé une série d'erreurs E° entre la série d'initialisation X° et la série reconstruite X°' correspondante.

Chaque série d'erreur E° comporte, pour chaque instant de mesure p, une erreur e°(p) entre la mesure x°(p) à cet instant de mesure p de la série d'initialisation X° et la valeur reconstruite x°'(p) à cet instant de mesure p de la série reconstruite X°', par exemple par selon l'équation [Math. 3] précédente.

Au cours d'une étape 512, à partir des séries d'erreurs E°, il est calculé un ou plusieurs paramètres d'une loi de probabilité que ces séries d'erreurs E° sont supposées suivre. Par exemple, il peut être considéré que les séries d'erreurs E° suivent la loi normale caractérisée par une moyenne $\mu$ et un écart type $\Sigma$. Ainsi, la moyenne $\mu$ et/ou l'écart type $\Sigma$ peuvent être calculés à partir des séries d'erreurs E°. Pour cela, une estimation par maximum de vraisemblance (de l'anglais « Maximum Likelihood Etimation », également désignée par l'acronyme MLE) peut être utilisée.

Au cours d'une étape 514, pour chaque série d'erreurs E°, une série d'anomalies A° est calculée à partir de la moyenne $\mu$ et de l'écart type $\Sigma$, par exemple selon la formule [Math. 4] précédente.

Au cours d'une étape 516, pour chaque série d'anomalies A°, une fonction de répartition dite saine F° de la série d'anomalies A° considérée est calculée, par exemple selon la formule [Math. 5] précédente.

Au cours d'une étape 518, la fonction de répartition de référence $F_s$ est calculée à partir des fonctions de répartition F°, par exemple en les moyennant.

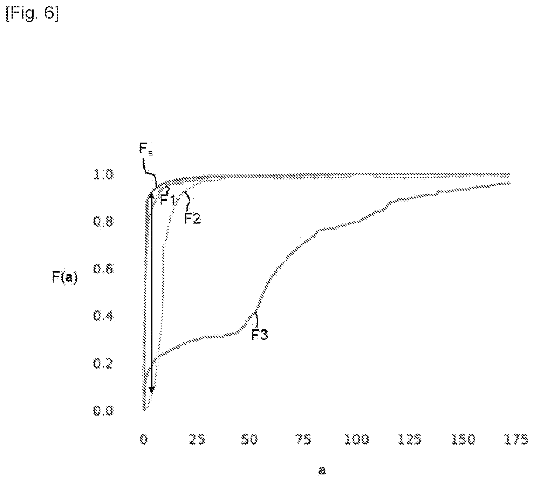

En référence à la figure 6, un exemple de fonction de répartition de référence $F_s$ et plusieurs exemples de fonction de répartition F1, F2, F3 sont illustrés.

La fonction de répartition F1 correspond à un fonctionnement normal des vannes 114, 116 et est donc très proche de la fonction de répartition de référence $F_s$, de sorte que l'aire les séparant est très faible.

En revanche, la fonction de répartition F3 correspond à un fonctionnement anormal des vannes 114, 116 et est donc très éloignée de la fonction de répartition de référence $F_s$, de sorte que l'aire les séparant est très élevée.

La fonction de répartition F2 correspond à un fonctionnement normal des vannes 114, 116, mais avec de faibles erreurs (c'est-à-dire pour les petites valeurs de a). De telles faibles erreurs peuvent en effet se produire de manière discrète mais fréquemment à cause de l'environnement de l'aéronef qui peut être par moment très bruité. Du fait de considérer l'aire entre les courbes, il est possible de correctement classer le fonctionnement des vannes 114, 116 comme normal. Cela n'aurait peut-être pas été le cas si le critère avait par exemple été un critère classique de la plus grande différence verticale entre les courbes. Dans ce dernier cas, en effet, à cause des faibles erreurs, cette plus grande distance verticale (représentée par la flèche double sur la figure 6) serait très élevée.

En référence à la figure 7, un exemple de série courante de mesures X est illustré (temps en abscisse, mesure en ordonnée), ainsi que la série courante reconstruite X' et la série courante d'anomalies A associées, pour un comportement normal de la vanne 114 ou 116. Comme cela est visible, la série courant de mesures X comporte un pic PX initial, correspondant par exemple à la montée en pression de la vanne 114 ou 116 consécutive à son ouverture. Or, du fait que l'encodeur/décodeur 126 n'arrive pas à reconstruire ce pic PX, la série courante reconstruite X' ne comporte pas de pic correspondant, de sorte que la série courante d'anomalies A comporte un pic PA au moment du pic PX.

En utilisant un seuil de détection bas (par exemple 110), toutes les séries temporelles présentant le comportement illustré seraient considérées comme anormales, alors que le système (la vanne 114 ou 116) fonctionne normalement. À l'inverse, si un seuil élevé est choisi (par exemple 160), il ne permettra de détecter un comportement anormal. Pour illustrer cela, la figure 8 illustre une série courante de mesures X~ (temps en abscisse, mesure en ordonnée) avec un pic initial PX~, ainsi que la série courante reconstruite X'~ et la série courante d'anomalies A~ associées, pour un comportement anormal de la vanne 114 ou 116. Comme le comportement est anormal, la série courante reconstruite X'~ est légèrement décalée par rapport à la série courante de mesures X'-, ce léger décalage est parfois appelé une « faible dérive ». Ainsi, les anomalies de la série d'anomalies, passé le pic initial PA~, sont légèrement supérieures à zéro. Pour détecter la faible dérive, il faudrait utiliser un seuil relativement faible, ce qui conduirait, à cause du pic initial PA~, à des fausses détections d'anormalité. Au contraire, un seuil élevé, supérieur au pic initial PA-, ne permettrait pas de détecter la faible dérive.

Ainsi, avec un seuil de détection directement appliqué sur la série courante d'anomalies, du fait de la présence du pic initial, soit un comportement anormal serait déduit de presque toutes les séries courantes de mesures, soit un comportement sain, suivant le seuil de détection choisi. Dans les deux cas, ce n'est pas satisfaisant.

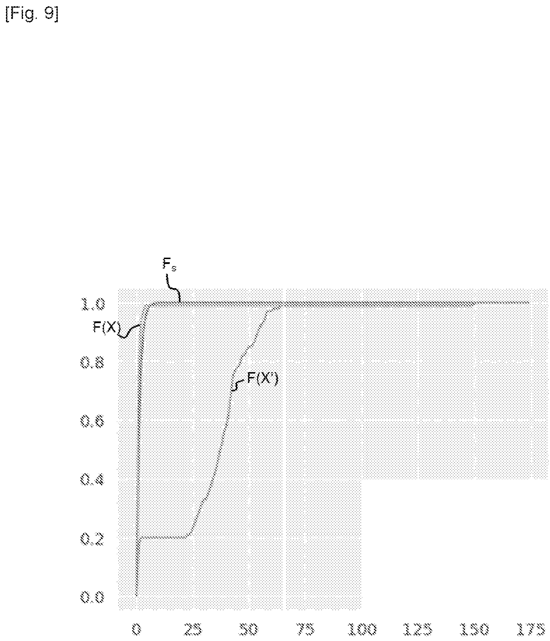

En référence à la figure 9, une fonction de répartition de référence FS est illustrée, avec la fonction de répartition F(X) pour la série courante de mesures X de la figure 7 et la fonction de répartition F(X~) pour la série courante de mesures X~ de la figure 8. Comme cela est visible, la présence du pic PX initial, ne change pas beaucoup la fonction de répartition F(X) par rapport à la fonction de répartition de référence $F_S$, conduisant à une différence d'aire très faible. En revanche, la fonction de répartition F(X') est très différente de la fonction de répartition de référence $F_S$, conduisant à une différence d'aitre élevée. Ainsi, il est possible de distinguer le comportement normal de la figure 7, du comportement anormal de la figure 8, ce que ne permettrait pas l'utilisation d'un seuil de détection sur les séries courantes d'anomalie A, A~.

En conclusion, on notera que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

**Revendications**

1. Procédé (400) de détection d'une anomalie dans un système (110) d'un aéronef (100), comportant :

   - une obtention (402) d'une série de mesures dite courante (X) d'une ou plusieurs grandeurs physiques (PT1, PT2) du système (110), pendant une période de temps où le système (110) fonctionne ;
   - à partir de la série courante de mesures (X), une fourniture (406) par un encodeur/décodeur (126) d'une série reconstruite dite courante (X') ; et
   - une comparaison (408) de la série courante reconstruite (X') avec la série courante de mesures (X) afin d'obtenir une série d'anomalies dite courante (A) représentant des anomalies de la série courante reconstruite (X') par rapport à la série courante de mesures (X) ;

   **caractérisé par** :

   - un calcul (410) d'une fonction de répartition dite courante (F) de la série courante d'anomalies (A) ;
   - un calcul (412) d'une aire séparant la fonction de répartition courante (F) d'une fonction de répartition de référence ($F_s$) ; et
   - une comparaison (414) de l'aire avec un seuil prédéfini,
   - une détection d'une anomalie en fonction de la comparaison.

2. Procédé (400) selon la revendication 1, dans lequel le système (110) est conçu pour fonctionner dans plusieurs configurations de fonctionnement et comportant en outre :

   - une sélection (404), parmi des encodeur/décodeur (126) respectivement associé aux configurations de fonctionnement, de celui associé à la configuration de fonctionnement dans lequel se trouvait le dispositif pendant la série courante de mesures (X).

3. Procédé (400) selon la revendication 1 ou 2, dans lequel l'encodeur/décodeur (126) est un système à apprentissage préalablement entraîné pour reconstruire des séries de mesures acquises pendant un fonctionnement normal du système (110).

4. Procédé (400) selon la revendication 3, dans lequel l'encodeur/décodeur (126) comporte un réseau de neurones encodeur (202) et un réseau de neurones décodeur (204).

5. Procédé (400) selon la revendication 4, dans lequel les réseaux de neurones (202, 204) sont deux réseaux de neurones récurrents à mémoire court terme et long terme.

6. Procédé (400) selon l'une quelconque des revendications 1 à 5, dans lequel le système (110) est un système de dégivrage d'une lèvre (106) d'entrée d'air, le système de dégivrage étant conçu pour prélever de l'air chaud d'une turbomachine (102), et comportant un canal (112) d'acheminement de l'air chaud jusqu'à la lèvre d'entrée d'air (106) et au moins une vanne (114, 116) sur le canal d'acheminement (112).

7. Procédé (400) selon la revendication 6, dans lequel le système de dégivrage (110) comporte deux vannes (114, 116) en série sur le canal d'acheminement (112).

8. Programme d'ordinateur (132) téléchargeable depuis un réseau de communication et/ou enregistré sur un support lisible par ordinateur, **caractérisé en ce qu'**il comprend des instructions pour l'exécution des étapes d'un procédé (400) selon l'une quelconque des revendications 1 à 7, lorsque ledit programme d'ordinateur (132) est exécuté sur un ordinateur.

9. Dispositif (124) de surveillance d'un système (110) d'un aéronef (100), comportant :

   - un module (302) d'obtention d'une série de mesures dite courante (X) d'une ou plusieurs grandeurs physiques (PT1, PT2) du dispositif, pendant une période de temps où le dispositif fonctionne ;
- un module (306) d'utilisation d'un encodeur/décodeur (126) pour fournir une série reconstruite dite courante (X')
à partir de la série courante de mesures (X) ; et
- un module (308) de comparaison de la série courante reconstruite (X') avec la série courante de mesures (X) afin
d'obtenir une série d'anomalies dite courante (A) représentant des anomalies de la série courante reconstruite
(X') par rapport à la série courante de mesures (X) ;

**caractérisé par** :

- un module (310) de calcul d'une fonction de répartition dite courante (F) de la série courante d'anomalies (A) ;
- un module (312) de calcul d'une aire séparant la fonction de répartition courante (F) d'une fonction de répartition
de référence ($F_s$) ; et
- un module (314) de comparaison de l'aire avec un seuil prédéfini, et de détection d'une anomalie en fonction de
la comparaison.

## Patentansprüche

1. Verfahren (400) zum Erkennen einer Anomalie in einem System (110) eines Flugzeugs (100), umfassend:

   - Erhalten (402) einer sogenannten aktuellen Messreihe (X) einer oder mehrerer physikalischer Größen (PT1, PT2) des Systems (110) während eines Zeitraums, in dem sich das System (110) in Betrieb befindet;
   - Bereitstellen (406), durch einen Encoder/Decoder (126) auf Grundlage der aktuellen Messreihe (X), einer sogenannten aktuellen rekonstruierten Reihe (X'); und
   - Vergleichen (408) der aktuellen rekonstruierten Reihe (X') mit der aktuellen Messreihe (X), um eine sogenannte aktuelle Reihe von Anomalien (A) zu erhalten, die Anomalien der aktuellen rekonstruierten Reihe (X') in Bezug auf die aktuelle Messreihe (X) darstellt;

   **gekennzeichnet durch**:

   - Berechnen (410) einer sogenannten aktuellen Verteilungsfunktion (F) der aktuellen Reihe von Anomalien (A);
   - Berechnen (412) einer Fläche, die die aktuelle Verteilungsfunktion (F) von einer Referenzverteilungsfunktion ($F_S$) trennt; und
   - Vergleichen (414) der Fläche mit einer vordefinierten Schwelle,
   - Erkennen einer Anomalie in Abhängigkeit von dem Vergleich.

2. Verfahren (400) nach Anspruch 1, wobei das System (110) dafür konzipiert ist, in mehreren Betriebskonfigurationen zu arbeiten, und weiter umfassend:

   - Auswählen (404), aus Encodern/Decodern (126), die jeweils den Betriebskonfigurationen zugeordnet sind, desjenigen, der der Betriebskonfiguration zugeordnet ist, in der sich die Vorrichtung während der aktuellen Messreihe (X) befand.

3. Verfahren (400) nach Anspruch 1 oder 2, wobei der Encoder/Decoder (126) ein lernfähiges System ist, das zuvor trainiert wurde, um Messreihen zu rekonstruieren, die während eines Normalbetriebs des Systems (110) erfasst wurden.

4. Verfahren (400) nach Anspruch 3, wobei der Encoder/Decoder (126) ein neuronales Encoder-Netzwerk (202) und ein neuronales Decoder-Netzwerk (204) umfasst.

5. Verfahren (400) nach Anspruch 4, wobei die neuronalen Netzwerke (202, 204) zwei rekurrente neuronale Netzwerke mit Kurzzeit- und Langzeitspeicher sind.

6. Verfahren (400) nach einem der Ansprüche 1 bis 5, wobei das System (110) ein System zum Enteisen einer Lufteinlasslippe (106) ist, wobei das Enteisungssystem dafür konzipiert ist, warme Luft von einem Turbotriebwerk (102) zu entnehmen, und einen Kanal (112) zum Zuführen der warmen Luft zur Lufteinlasslippe (106) und mindestens ein Ventil (114, 116) an dem Zuführkanal (112) umfasst.

7. Verfahren (400) nach Anspruch 6, wobei das Enteisungssystem (110) zwei Ventile (114, 116) in Reihenschaltung am Zuführkanal (112) umfasst.

8. Computerprogramm (132), das aus einem Kommunikationsnetzwerk heruntergeladen werden kann und/oder auf einem computerlesbaren Träger gespeichert ist, **dadurch gekennzeichnet, dass** es Anweisungen umfasst zur Ausführung der Schritte eines Verfahrens (400) nach einem der Ansprüche 1 bis 7, wenn das Computerprogramm (132) auf einem Computer ausgeführt wird.

9. Vorrichtung (124) zur Überwachung eines Systems (110) eines Flugzeugs (100), umfassend:

   - ein Modul (302) zum Erhalten einer sogenannten aktuellen Messreihe (X) einer oder mehrerer physikalischer Größen (PT1, PT2) der Vorrichtung während eines Zeitraums, in dem sich die Vorrichtung in Betrieb befindet;
   - ein Modul (306) zur Verwendung eines Encoders/Decoders (126), um auf Grundlage der aktuellen Messreihe (X) eine sogenannte aktuelle rekonstruierte Reihe (X') bereitzustellen; und
   - ein Modul (308) zum Vergleichen der aktuellen rekonstruierten Reihe (X') mit der aktuellen Messreihe (X), um eine sogenannte aktuelle Reihe von Anomalien (A) zu erhalten, die Anomalien der aktuellen rekonstruierten Reihe (X') in Bezug auf die aktuelle Messreihe (X) darstellt;

   **gekennzeichnet durch**:

   - ein Modul (310) zum Berechnen einer sogenannten aktuellen Verteilungsfunktion (F) der aktuellen Reihe von Anomalien (A);
   - ein Modul (312) zum Berechnen einer Fläche, die die aktuelle Verteilungsfunktion (F) von einer Referenzverteilungsfunktion ($F_S$) trennt; und
   - ein Modul (314) zum Vergleichen der Fläche mit einer vordefinierten Schwelle und zum Erkennen einer Anomalie in Abhängigkeit von dem Vergleich.

## Claims

1. A method (400) for detecting an anomaly in a system (110) of an aircraft (100), comprising:

   - obtaining (402) a series of measurements, called current series of measurement (X), of one or more physical quantities (PT1, PT2) of the system (110), during a period of time when the system (110) is functioning;
   - on the basis of the current series of measurements (X), providing (406) by an encoder/decoder (126) a reconstructed series, called reconstructed current series (X'); and
   - comparing (408) the reconstructed current series (X') with the current series of measurements (X) in order to obtain a series of anomalies, called current series of anomalies (A);

   **characterised by**:

   - computing (410) a distribution function, called current distribution function (F), of the current series of anomalies (A);
   - computing (412) an area separating the current distribution function (F) from a reference distribution function ($F_s$); and
   - comparing (414) the area with a predefined threshold,
   - detecting an anomaly as a function of the comparison.

2. The method (400) according to claim 1, wherein the system (110) is configured to operate in several functioning configurations and further comprising:

   - selecting (404), from encoders/decoders (126) respectively associated with the functioning configurations, the one associated with the functioning configuration in which the device was during the current series of measurements (X).

3. The method (400) according to claim 1 or 2, wherein the encoder/decoder (126) is a pre-trained learning system for reconstructing series of measurements acquired during normal functioning of the system (110).

4. The method (400) of claim 3, wherein the encoder/decoder (126) comprises an encoder neural network (202) and a decoder neural network (204).

5. The method (400) according to claim 4, wherein the neural networks (202, 204) are two recurrent neural networks with long short-term memory.

6. The method (400) according to any one of claims 1 to 5, wherein the system (110) is a system for de-icing an air inlet lip (106), the de-icing system being configured to collect the hot air from a turbomachine (102), and comprising a channel (112) for conveying the hot air to the air inlet lip (106) and at least one valve (114, 116) on the conveying channel (112).

7. The method (400) according to claim 6, wherein the de-icing system (110) comprises two valves (114, 116) in series on the conveying channel (112).

8. A computer program (132) downloadable from a communications network and/or recorded on a computer-readable medium, **characterised in that** it comprises instructions for executing the steps of a method (400) according to any one of claims 1 to 7, when said computer program (132) is executed on a computer.

9. A device (124) for monitoring a system (110) of an aircraft (100), comprising:

- a module (302) for obtaining a series of measurements, called current series of measurement (X), of one or more physical quantities (PT1, PT2) of the device, during a period of time when the device is functioning;
- a module (306) for using an encoder/decoder (126) to provide a reconstructed series, called reconstructed current series (X'), from the current series of measurements (X); and
- a module (308) for comparing the reconstructed current series (X') with the current series of measurements (X) in order to obtain a series of anomalies, called current series of anomalies (A);

**characterised by**:

- a module (310) for computing a distribution function, called current distribution function (F), of the current series of anomalies (A);
- a module (312) for computing an area separating the current distribution function (F) from a reference distribution function ($F_s$); and
- a module (314) for comparing the area with a predefined threshold and detecting an anomaly as a function of the comparison.

[Fig. 1]

[Fig. 2]

[Fig. 3]

[Fig. 4]

400

```
┌─────────┐
│   402   │
└────┬────┘
     │
     ▼
┌─────────┐
│   404   │
└────┬────┘
     │
     ▼
┌─────────┐
│   406   │
└────┬────┘
     │
     ▼
┌─────────┐
│   408   │
└────┬────┘
     │
     ▼
┌─────────┐
│   410   │
└────┬────┘
     │
     ▼
┌─────────┐
│   412   │
└────┬────┘
     │
     ▼
┌─────────┐
│   414   │
└─────────┘
```

[Fig. 5]

| 502 |
| 504 |
| 506 |
| 508 |
| 510 |
| 512 |
| 514 |
| 516 |
| 518 |

~500

[Fig. 6]

[Fig. 7]

[Fig. 8]

[Fig. 9]

**EP 4 523 139 B1**

## RÉFÉRENCES CITÉES DANS LA DESCRIPTION

**Documents brevets cités dans la description**

- US 2020012918 A1